# EUROPEAN PATENT APPLICATION

(11) **EP 4 300 980 A1**
(43) Date of publication of application: **03.01.2024**
(21) Application number: 22770224.8
(22) Date of filing: 08.02.2022
(51) Int. Cl.: H04N 21/431

(54) **VIDEO PROCESSING METHOD AND APPARATUS, AND ELECTRONIC DEVICE AND STORAGE MEDIUM**

(30) Priority: 17.03.2021 CN 202110287933
(71) Applicant: Beijing Zitiao Network Technology Co., Ltd., Beijing 100190 (CN)
(72) Inventor: JIANG, Jingxuan, Beijing 100190 (CN); XIE, Yuwei, Beijing 100190 (CN)
(74) Representative: Dentons UK and Middle East LLP
(86) International application number: PCT/CN2022/075451
(87) International publication number: WO 2022/193867

(57) **Abstract**

The present disclosure relates to a video processing method and apparatus, and an electronic device and a storage medium. The method comprises: receiving a trigger operation acting on a target guide control of a video publishing page; and in response to the trigger operation, adding a target guide identifier to the current video to be published, so as to display the target guide identifier during the playing process of said current video. By means of the technical solution of the embodiments of the present disclosure, the goal of conveniently adding a target guide identifier to a video is achieved, such that a video author can conveniently add the target guide identifier without jumping to another application during the process of publishing the video.

## Description

This application claims priority to Chinese Patent Application No. 202110287933.3, titled "VIDEO PROCESSING METHOD AND APPARATUS, AND ELECTRONIC DEVICE AND STORAGE MEDIUM", filed on March 17, 2021 with the China National Intellectual Property Administration, which is incorporated herein by reference in its entirety.

### FIELD

The present disclosure relates to the field of computer technology, and in particular to a method and apparatus for processing a video, an electronic device, and a storage medium.

### BACKGROUND

It is a common object for content producers to gain followers. In conventional technology, gaining followers is usually achieved through a preset guide button, such as a "Follow" button. However, in a video playing scenario, the attention of a user is focused on the video content, and the guide button is prone to be ignored.

In view of the above problem, those skilled in the art conceive to add a guide button in the video playback progress. However, the path of adding the button is complicated. Specifically, it is required to be added through an application other than the video posting application, or only videos that have been posted support modification, edit, and adding such button through personalization configuration.

### SUMMARY

In order to solve the above technical problems or at least partly solve the above technical problems, a method and apparatus for processing a video, an electronic device, and a storage medium are provided according to the present disclosure, which can realize the objective of adding a target guide sticker conveniently on the video, so that a video author can easily add a target guide sticker during the process of posting a video without jumping to other applications.

In a first aspect, a method for processing a video is provided according to the embodiments of the present disclosure, the method includes:
receiving a triggering operation acting on a target guide control on a video posting interface; and
in response to the triggering operation, adding a target guide sticker in a current to-be-posted video, to display the target guide sticker during a process of playing the current to-be-posted video.

In a second aspect, an apparatus for processing a video is provided according to the embodiments of the present disclosure, the apparatus includes:
a receiving module, configured to receive a triggering operation acting on a target guide control on a video posting interface; and
an adding module, configured to add a target guide sticker in a current to-be-posted video in response to the triggering operation, to display the target guide sticker during a process of playing the current to-be-posted video.

In a third aspect, a device is provided according to the embodiments of the present disclosure, the device includes: one or more processors; a storage configured to store one or more programs; wherein the one or more programs, when executed by the one or more processors, cause the one or more processors to implement the method for processing the video according to any one of embodiments of the present disclosure.

In a fourth aspect, a store medium is provided according to the embodiments of the present disclosure. The store medium includes computer-executable instructions, where the computer-executable instructions are configured to, when executed by a computer processor, implement the method for processing the video according to any one of embodiments of the present disclosure.

In a fifth aspect, a computer program product is provided according to the embodiments of the present disclosure. The computer program product includes a computer program carried on a non-transitory computer readable medium; where the computer program includes program codes configured to implement the method for processing the video according to any one of embodiments of the present disclosure.

Compared with the conventional technology, the technical solutions provided by embodiments of the present disclosure have the following advantages.

When posting a video, a target guide sticker is added by using a video posting interface without jumping to other applications, which simplifies the operation path of video processing and helps to improve the adding efficiency and user experience.

### BRIEF DESCRIPTION OF THE DRAWINGS

The drawings herein are incorporated into the specification and constitute a part of the specification, which show embodiments that comply with the present disclosure. The drawings and the specification are used as a whole to explain the principle of the present disclosure.

In order to more clearly illustrate the embodiments of the present disclosure or the technical solutions in the conventional technology, the drawings used in the description of the embodiments or the conventional technology are briefly introduced below. It is apparent that, for those ordinary skilled in the art, other drawings can be obtained according to the provided drawings without any creative effort.
Figure 1 is a schematic flowchart of a method for processing a video according to an embodiment of the present disclosure;
Figure 2 is a schematic diagram of an interface of a video posting interface according to an embodiment of the present disclosure;
Figure 3 is a schematic flowchart of a method for processing a video according to an embodiment of the present disclosure;
Figure 4 is a schematic diagram of an interface for adding a follow guide sticker according to an embodiment of the present disclosure;
Figure 5 is a schematic diagram of an interface for invoking a selection window for custom adding-time according to an embodiment of the present disclosure;
Figure 6 is a schematic diagram of a pop-up window interface presenting preset description content according to an embodiment of the present disclosure;
Figure 7 is a playing interface for video preview in an interface for adding a follow guide sticker according to an embodiment of the present disclosure;
Figure 8 is a schematic flowchart of a method for processing a video according to an embodiment of the present disclosure;
Figure 9 is a schematic diagram of an interface of a video posting interface after adding a follow guide according to an embodiment of the present disclosure;
Figure 10 is a schematic structural diagram of an apparatus for processing a video according to an embodiment of the present disclosure; and
Figure 11 is a schematic structural diagram of an electronic device according to an embodiment of the present disclosure.

### DETAILED DESCRIPTION OF EMBODIMENTS

In order to understand the above purposes, features, and advantage of the present disclosure more clearly, the technical solutions according to the present disclosure will be further described. It should be noted that the embodiments of the present disclosure and the features in the embodiments may be combined with each other if there is no conflict.

In the following description, numerous specific details are set forth in order to provide thorough understanding of the present disclosure. However, the present disclosure may also be implemented in other ways different from those described here. Obviously, the embodiments in the specification are only a part of the embodiments of the present disclosure, rather than all the embodiments.

The embodiments of the present disclosure are described in detail below with reference to the drawings. Although some embodiments of the present disclosure are shown in the drawings, it should be understood that the present disclosure may be implemented in various forms and should not be limited to the described embodiments herein. Rather, the embodiments are provided for thoroughly and completely understanding the present disclosure. It should be understood that the drawings and the embodiments of the present disclosure are exemplary and are not intended to limit the protection scope of the present disclosure.

It should be understood that the steps in the method implementations of the present disclosure may be performed in different orders and/or in parallel. In addition, the method implementations may include an additional step and/or an omitted step that is not shown herein. The scope of the present disclosure is not limited in this aspect.

The term "include" and its variations in the present disclosure means open-ended inclusion, that is, "including but not limited to". The term "based on" means "based at least in part on". The term "one embodiment" means "at least one embodiment". The term "another embodiment" means "at least one additional embodiment". The term "some embodiments" means "at least some embodiments". The definitions of other terms are provided in the following descriptions.

It should be noted that wordings such as "first" and "second" in the present disclosure are only used to distinguish apparatuses, modules or units, are not intended to limit an sequential order or interdependence of the functions performed by the apparatuses, modules or units.

It should be noted that the wordings such as "one" and "multiple" in the present disclosure are illustrative rather than restrictive. Those skilled in the art should understand that the modifications should be understood as "one or more" unless otherwise expressly indicated in the context.

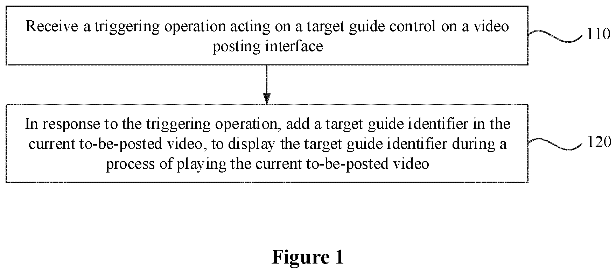

Figure 1 is a schematic flowchart of a method for processing a video according to an embodiment of the present disclosure. The method may be implemented by an apparatus for processing a video, and the device may be implemented in the form of software and/or hardware.

As shown in Figure 1, the method for processing a video provided in this embodiment includes step 110 and step 120 as follows.

In step 110, a triggering operation acting on a target guide control on a video posting interface is received.

The video posting interface is a video posting interface of a video posting application.

A target guide control (referred to as a target control for short) is a control that guides a user to add a target guide sticker in a video.

A target guide sticker (referred to as a target sticker for short) may be an interaction icon or an interaction button, for example. In an embodiment, the target guide sticker may be a follow guide sticker (referred to as a follow sticker for short), a like guide sticker (referred to as a like sticker for short), or a share guide sticker (referred to as a share sticker for short).

It should be noted that when the user clicks on the follow guide sticker, the user can follow the video author. Subsequently, when the video author posts a new work, the new work is automatically pushed to the terminal of the user following the video author, so that the user following the video author can view the new work of the video author timely, thereby improving the efficiency of acquiring videos that the user is interested in. When the user clicks on the like guide sticker, the user can like the currently played video; when the user clicks on the share guide sticker, the user can jump to the sharing interface to share the currently played video with friends or to a sharing platform (for example, Moments).

For purpose of understanding, in the following illustration is made by taking the case where the target guide control is a follow guide control (referred to as a follow control for short) and the target guide sticker is a follow guide sticker as an example. It should be noted that the processing is similar in the case that the target guide control is a like or share guide control and the target guide sticker is a like or share guide sticker.

As an example, when the target guide control is a follow guide control and the target guide sticker is a follow guide sticker, the follow guide control may be set at a preset position on the video posting interface. In this way, when a user posts a new video, a follow guide sticker may be added on the to-be-posted video by using the follow guide control displayed at the preset position of the video posting interface, to simplify the operation path for adding the follow guide sticker on the to-be-posted video, and improve the adding efficiency and user experience. The preset position of the follow guide control on the video posting interface may be automatically configured by the system, or it may be a custom setting by the user, which is beneficial to improving the flexibility and richness of interaction.

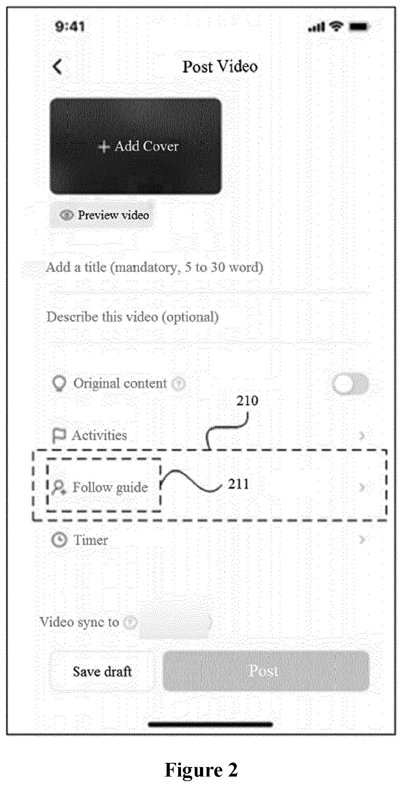

As an example, reference is made to Figure 2. Figure 2 is a schematic diagram of an interface of a video posting interface, in which a "Follow Guide Control" 211 is displayed at a preset position 210 of the video posting interface. When the user clicks on the "Follow Guide Control" 211, a triggering operation acting on the follow guide control is received.

In the present disclosure, a follow guide control is displayed on the video posting interface, thereby achieving the purpose of adding the follow guide sticker on the to-be-posted video during the process of posting the video by the user, which can simplify the adding path of the follow guide sticker and elevate the adding efficiency, thereby improving the efficiency of posting videos by the user and improving user experience and the efficiency of posting videos.

In step 120, in response to the triggering operation, a target guide sticker is added on a current to-be-posted video, to display the target guide sticker during a process of playing the current to-be-posted video.

In one implementation, once the triggering operation is received, in response to the triggering operation, the target guide sticker is automatically added in the current to-be-posted video. An adding position and an adding duration of the target guide sticker in the current to-be-posted video, and a display style of the target guide sticker may be all default settings of the system. For example, the target guide sticker may be added at a position of 5 seconds before the end of the current to-be-posted video, i.e., the target guide sticker is started to be displayed at a moment of 5 seconds before ending the playing progress of the current to-be-posted video. The display position of the target guide sticker may be at the lower right corner, upper right corner or middle area of the video footage, with the goal of increasing the probability that the user sees the target guide sticker, to guide the user to click on the target guide sticker (e.g., the follow guide sticker) and achieve the objective of gaining followers for the author of the current to-be-posted video.

In another embodiment, once the triggering operation is received, in response to the triggering operation, an interface for adding a target guide sticker is entered, for supporting the user to add the target guide sticker voluntarily by using the interface for adding the target guide sticker. For example, the adding position and the adding duration of the target guide sticker in the current to-be-posted video, and the display style of the target guide sticker and the like may be customized by the user.

In another implementation, in response to the triggering operation, the target guide sticker is added in the current to-be-posted video, to display the target guide sticker once an audio related to the target guide sticker is identified during a process of playing the current to-be-posted video. For example, in a case that the audio associated with following is identified, the follow guide sticker is displayed on the video footage. As an example, the audio associated with following may be the audio of the host saying "please follow me" or "I would appreciate it if you follow me", etc., which is not limited in the embodiments of the present disclosure.

In addition, the solution of adding a target guide sticker through speech recognition may be implemented in combination with the above optional embodiments, or may be implemented separately. In other words, the target guide sticker may be presented according to the recommended time selected by the user or custom time. Alternatively, when the user triggers the target guide control (e.g., the target guide control is a target guide switch, and the user turns on the target guide switch) but does not select a recommended time or custom time, it may be identified whether the current to-be-posted video has an audio associated with an objective (e.g., follow, like, or share, etc.), and if yes the target guide sticker may be presented when the video is played to the position corresponding to such audio. Or alternatively, not only when an audio associated with the target guide sticker is identified, but also when the video is played to the recommended time/custom time (it can correspond to the case that the user turns on the target guide switch and triggers the recommended time/custom time control at the same time), the target guide sticker may be displayed on the video footage. As a result, the interactive space is enriched and the user experience is improved.

In the technical solution of this embodiment, by receiving a triggering operation acting on a target guide control on a video posting interface, and in response to the triggering operation, adding a target guide sticker in a current to-be-posted video, to display the target guide sticker during a process of playing the current to-be-posted video, the objective of adding the target guide sticker while posting the video is realized. In this way, it can simplify the operation path of adding the target guide sticker on the video, so that the video author can easily add target guide stickers during the video posting process without jumping to other applications. Hence, it is beneficial to improve adding efficiency and user experience, which further improves video posting efficiency.

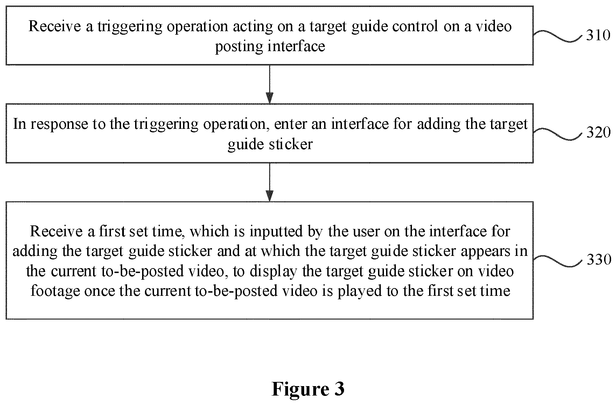

Figure 3 is a schematic flowchart of a method for processing a video according to an embodiment of the present disclosure. On the basis of the above embodiments, this embodiment provides a manner of responding to the triggering operation acting on the target guide control on the video posting interface. In this embodiment, in response to the triggering operation, the interface for adding the target guide sticker is entered, which supports the user to add the target guide sticker voluntarily by using the interface for adding the target guide sticker. The same or similar content as the above embodiments are not repeated in this embodiment, and related explanations may refer to the above embodiments.

As shown in Figure 3, the method includes step S310 to step 330 as follows.

In step 310, a triggering operation acting on a target guide control on a video posting interface is received.

In step 320, in response to the triggering operation, an interface for adding the target guide sticker is entered.

In step 330, a first set time, which is inputted by the user on the interface for adding the target guide sticker and at which the target guide sticker appears in the current to-be-posted video, is received, to display the target guide sticker on video footage once the current to-be-posted video is played to the first set time.

In one implementation, receiving the first set time, which is inputted by the user on the interface for adding the target guide sticker and at which the target guide sticker appears in the current to-be-posted video, includes:
receiving a triggering operation acting on a recommended time control, and determining a recommended time as the first set time; or,
upon receiving a triggering operation acting on a custom time control, presenting at least two candidate time options, and determining a selected candidate time as the first set time;
where the recommended time control and the custom time control are presented on the interface for adding the target guide sticker.

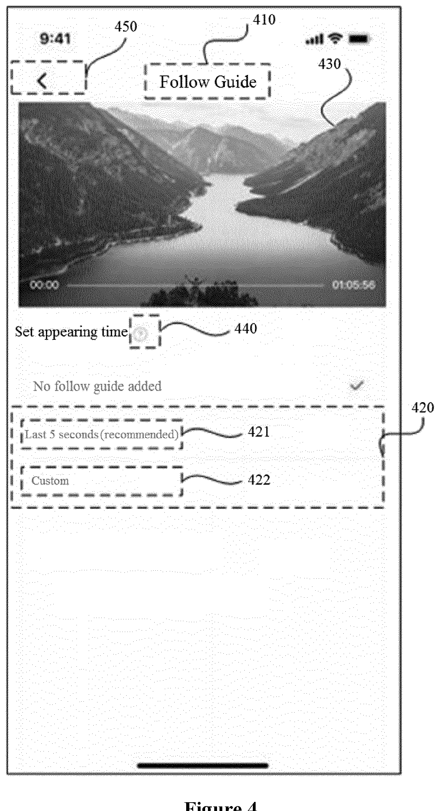

In an example where the target guide sticker is a follow guide sticker, reference may be made to Figure 4. Figure 4 is a schematic diagram of an interface for adding a follow guide sticker, in which the title of the interface may be set as "Follow Guide" (e.g., the interface title indicated by the reference numeral 410 in Figure 4), to facilitate the user to understand the function of the entered interface in time. In addition, the recommended time control 421 and the custom time control 422 are displayed at a first position 420 of the interface for adding the follow guide sticker. Once the user triggers the recommended time control 421, the follow guide sticker is controlled to be added at a position of 5 seconds (where the time of 5 seconds is a system-recommended time; the recommended time, for example, is a system pre-configured presenting time of the target guide sticker during video playing, which is not limited to 5 seconds but may be any specific time such as 6 seconds, 7 seconds) before the end of the current to-be-posted video, i.e., the follow guide sticker is started to be displayed at a moment of 5 seconds before ending the playing progress of the current to-be-posted video. For example, the total duration of the current to-be-posted video is 20 seconds, and if the user triggers the recommended time control 421, the follow guide sticker is started to be displayed when the current to-be-posted video is played to 15 seconds.

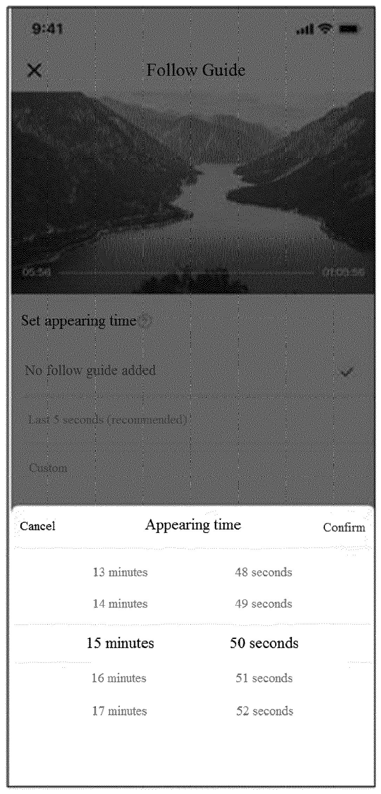

Furthermore, in a case that the user is not satisfied with the time recommended by the system, the user may trigger the custom time control 422 to invoke a selection window for custom adding-time, as shown in Figure 5. Figure 5 is a schematic diagram of an interface for invoking a selection window for custom adding-time, where the selection window shows at least two candidate time options (e.g., 13 minutes and 48 seconds, 14 minutes and 49 seconds, 15 minutes and 50 seconds, 16 minutes and 51 seconds, 17 minutes and 52 seconds and other candidate time options shown in Figure 5). Based on the selection window, the user may flexibly select the time to add the follow guide sticker in the to-be posted video. For example, as shown in Figure 5, in a case that the appearing time of the follow guide sticker set by the user through the selection window for custom adding-time is 15 minutes and 50 seconds, then, the follow guide sticker is displayed on the video footage when the to-be posted video is played to 15 minutes and 50 seconds.

In another implementation, a playing window of the current to-be-posted video and a custom time control are displayed on the interface for adding the target guide sticker. The playing window is used to play the current to-be-posted video and display a progress bar of the current to-be-posted video. Receiving the first set time, which is inputted by the user on the interface for adding the target guide sticker and at which the target guide sticker appears in the current to-be-posted video, includes:
in a case that a dragging operation acting on the progress bar of the current to-be-posted video and a triggering operation acting on a recommended time control are received, determining a time point on the progress bar when the drag operation stops as the first set time;
where the playing window of the current to-be-posted video and the custom time control are presented on the interface for adding the target guide sticker. As shown in Figure 4, a custom time control 422 and a playing window 430 of the current to-be-posted video are shown. The playing window 430 is used to play the current to-be-posted video, so that the user can preview the current to-be-posted video. The initial playing state of the playing window 430 is a paused state, in which only a video cover is shown and the current to-be-posted video is not played. Once the user triggers "Start Playing" control, the current to-be-posted video starts to play in the playing window 430, and the playing progress of the video is displayed through a progress bar. The video footage at different moments may be previewed by changing the playing progress position on the progress bar. In a case that the user manually drags, in the playing window 430, the progress bar of the current to-be-posted video to a specific position, and triggers the custom time control 422, then in the invoked selection window for custom adding-time, the appearing time of the target guide sticker is automatically displayed to be a current corresponding time of the progress bar. In this way, the user's operation of selecting the appearing time of the target guide sticker through selection window for custom adding-time is omitted; instead, the selection of custom adding-time is realized by dragging the progress bar. By enriching the interactive operation that the user customizes the appearing time of the target guide sticker in the video, the convenience of video processing can be improved, and the efficiency of adding and user experience can be improved.

Further, in one implementation, the in response to the triggering operation, adding the target guide sticker in the current to-be-posted video, to display the target guide sticker during a process of playing the current to-be-posted video further includes:
receiving a target presenting style of the target guide sticker, which is inputted by the user on the interface for adding the target guide sticker, to display the target guide sticker in the target presenting style during the process of playing the current to-be-posted video; or
receiving a target presenting position of the target guide sticker, which is inputted by the user on the interface for adding the target guide sticker, to display the target guide sticker at the target presenting position during the process of playing the current to-be-posted video; or
receiving the target presenting style and the target presenting position of the target guide sticker, which are inputted by the user on the interface for adding the target guide sticker, to display the target guide sticker in the target presenting style at the target presenting position during the process of playing the current to-be-posted video.

The target presenting style and/or target presenting position of the target guide sticker, inputted by the user on the interface for adding the target guide sticker, are received, to display the target guide sticker in the target presenting style during a process of playing the current to-be-posted video, or to display the target guide sticker at the target presenting position, or to display the target guide sticker in the target presenting style at the target presenting position. For example, in a case that the user only sets the target presenting style of the target guide sticker, the target guide sticker in the target presenting style is displayed during the process of playing the current to-be-posted video, without limiting the display position of the target guide sticker (at this time, system pre-configured position may be used). In a case that the user only sets the target presenting position of the target guide sticker, during the process of playing the current to-be-posted video, the target guide sticker is displayed at the target presenting position without limiting the presenting style of the target guide sticker (at this time, system pre-configured style may be used). In a case that the user sets both the target presenting position and the target presenting style of the target guide sticker, during the process of playing the current to-be-posted video, the target guide sticker in the target presenting style is displayed at the target presenting position. As a result, the diversity of interaction is enriched, and the user experience is improved.

In one embodiment, the user may select favorable target presenting style from a preset style library of target guide stickers, for example, a follow guide sticker with presenting style of a smiley sticker, a follow guide sticker with presenting style of a crying face animation, or a follow guide sticker with a certain animation effect, etc. The target presenting position refers to the display position of the target guide sticker in the video playing area or video footage. Specifically, it may be the upper right corner or the lower right corner of the video playing area to facilitate the triggering operation of the user. Such configuration takes consideration that most users are accustomed to using their right hand. It may also be in the middle position of the video playing area to attract the attention of the user to the greatest extent, so that the user can see the target guide sticker, to guide the user to trigger the target guide sticker, thereby gaining followers for the video author.

In a possible implementation, when a triggering operation acting on a description control is received, preset description content is presented, and the description control is presented on the interface for adding the target guide sticker.

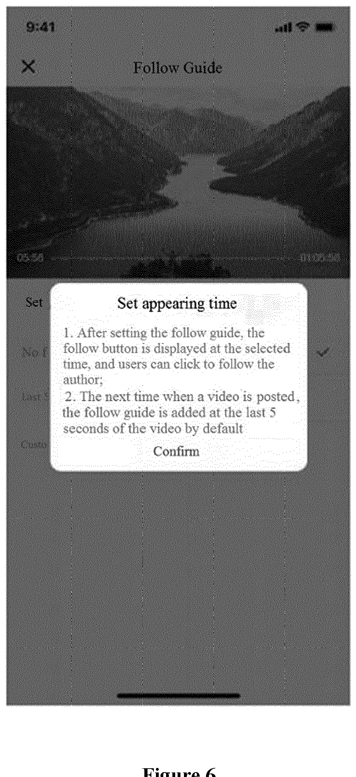

In an example case where the target guide sticker is a follow guide sticker, the description control may be referred to the question sticker "?" next to the "Set appearing time" pointed by the reference sign 440 in Figure 4. In a case that the user uses the function of adding follow guide sticker for the first time, the user may not understand the meaning of setting appearing time, then the description control 440 is used to raise a pop-up window displaying the preset description content. As shown in Figure 6, Figure 6 is a schematic diagram of a pop-up window interface for displaying preset description content. The specific content may be "1. After setting the follow guide, the follow button will be displayed at the selected time, and users can click to follow the author; 2. The next time when a video is posted, the follow guide will be added at the last 5 seconds of the video by default". The user may close the pop-up window by clicking "Confirm". By presenting preset description content, it can help the user understand the specific function of follow guide in a timely manner.

In a possible implementation, in a case that a video preview operation triggered by the user on the interface for adding the target guide sticker is received, the method further includes:
in response to the video preview operation, controlling the current to-be-posted video to start playing from a current playing progress position, and displaying the target guide sticker on the video footage when the playing of the current to-be-posted video reaches a playing progress position corresponding to the first set time; or
in response to the video preview operation, controlling the current to-be-posted video to start playing from the playing progress position corresponding to the first set time and displaying the target guide sticker on the video footage. By controlling the playing progress of the currently to-be-posted video to jump directly to the first set time, the playing progress of the video may be directly jumped to the position where the target guide sticker is added, and the effect after adding the target guide sticker is directly displayed. It is helpful to save the preview time of the user and facilitate the user to preview the adding effect fast and make timely adjustments.

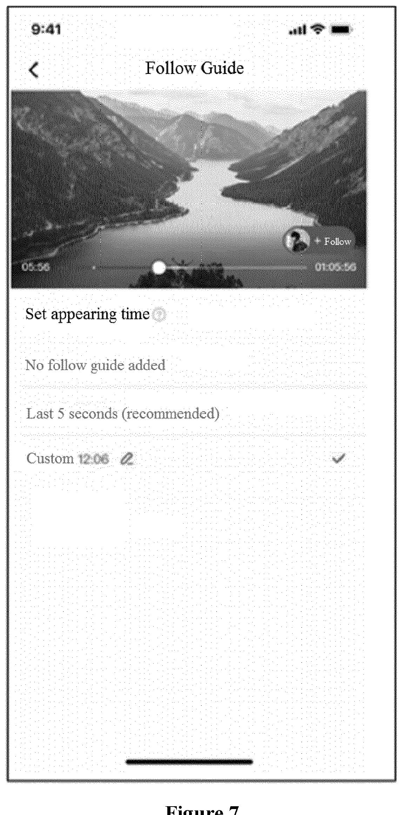

As shown in Figure 7, Figure 7 is a playing interface for video preview in an interface for adding the follow guide sticker. At the set appearing time, the follow guide sticker is displayed on the playing pictures of the video. In a case that the user clicks the follow guide sticker, the status of the follow guide sticker changes to "Followed". In a case that the user clicks the follow guide sticker again, the status of the follow guide sticker returns to "Follow". The playing process after the video is posted is the same as the playing process of the preview. During the playing process after the video is posted, when the video plays to the first set time, the follow guide sticker is presented on the video footage, and the user can trigger the follow guide sticker for the follow interaction operation.

Further, when the target guide sticker is displayed for a preset duration, the target guide sticker is hidden. The preset duration may be of a specific time length such as 6 seconds, 8 seconds, etc., which is dependent on the time required for the user to see the target guide sticker and trigger the target guide sticker. The preset duration is set appropriately to avoid displaying the target guide sticker on the video footage for too long to compromise the viewing experience of the user.

In addition, the interface for adding follow guide sticker may further present a follow guide sticker presenting duration control and a duration input box, and the user may trigger the follow guide sticker presenting duration control and input a specific duration in the duration input box.

In one embodiment, in a case that a display position of the target guide sticker on the video footage overlaps with a display position of a set sticker on the video footage, the display position of the target guide sticker on the video footage is adjusted; or the set sticker is controlled to be displayed over the target guide sticker.

In an embodiment, when the set sticker is an sticker of a product shopping cart, since this type of sticker usually has the highest priority and is not allowed to be blocked, when the display position of the target guide sticker on the video footage overlaps with the display position of the set sticker on the video footage, the target guide sticker may be adjusted to other position, or the set sticker may be displayed over the target guide sticker, i.e., the set sticker covers the target guide sticker, so that the set sticker is not blocked.

In the technical solution of the embodiment of the present disclosure, based on the above embodiments, it provides a manner of responding to the triggering operation acting on the target guide control on the video posting interface. Specifically, in response to the triggering operation, the interface for adding the target guide sticker is entered, which supports the user to add the target guide sticker voluntarily by using the interface for adding the target guide sticker. In this way, it can realize the objective of adding a target guide sticker while posting the video, simplify the operation path for adding the target guide sticker on the video, so that a video author can easily add a target guide sticker during the process of posting a video without jumping to other application, which is beneficial to improve adding efficiency and user experience, to further improve video posting efficiency.

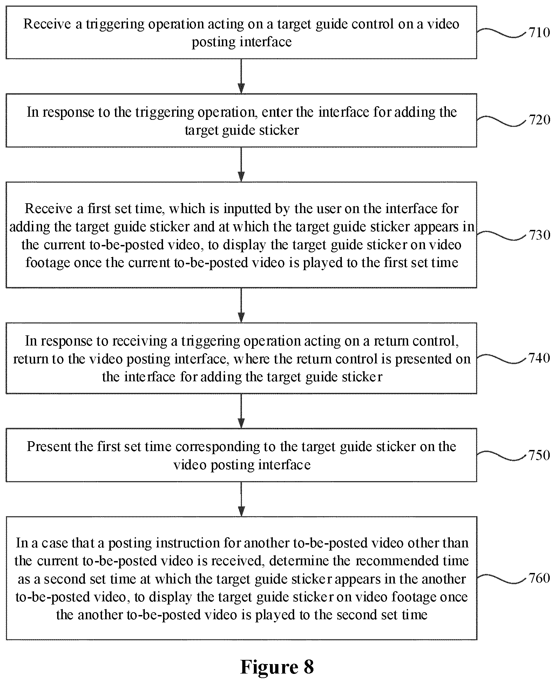

Figure 8 is a schematic flowchart of a method for processing a video according to an embodiment of the present disclosure. On the basis of the above embodiments, in this embodiment, the method for processing a video is optimized. In this embodiment, after adding the target guide sticker to the video once, in subsequent video posting, the target guide sticker is automatically added to the video, which significantly simplifies repetitive adding operations for the user, to improve the user experience and video posting efficiency.

The content that is the same or similar to the above embodiments is not repeated in this embodiment, and the relevant explanations may refer to the above embodiments.

As shown in Figure 8, the method includes step 710 to step 760.

In step 710, a triggering operation acting on a target guide control on a video posting interface is received.

In step 720, in response to the triggering operation, the interface for adding the target guide sticker is entered.

In step 730, a first set time, which is inputted by the user on the interface for adding the target guide sticker and at which the target guide sticker appears in the current to-be-posted video, is received, to display the target guide sticker on video footage once the current to-be-posted video is played to the first set time.

In step 740, in response to receiving a triggering operation acting on a return control, it returns to the video posting interface, where the return control is presented on the interface for adding the target guide sticker.

As shown in Figure 4, Figure 4 is a schematic diagram of an interface for adding a follow guide sticker. The return control 450 is presented on the interface for adding the follow guide sticker. When the user clicks the return control 450, it returns to the video posting interface.

In step 750, the first set time corresponding to the target guide sticker is presented on the video posting interface.

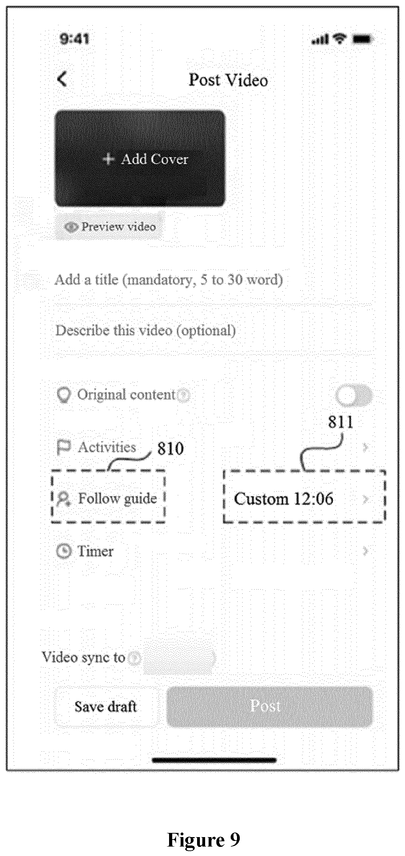

Figure 9 is a schematic diagram of an interface of a video posting interface after adding follow guide. As shown, the first set time is displayed at an associated position 811 of the follow guide control 810, for example, the first set time is a custom time of 12:06, indicating that the target guide sticker is displayed when playing the video to 12 minutes and 6 seconds.

In step 760, in a case that a posting instruction for another to-be-posted video other than the current to-be-posted video is received, the recommended time is determined as the second set time at which the target guide sticker appears on the another to-be-posted video, to display the target guide sticker on video footage once the another to-be-posted video is played to the second set time.

In this embodiment, for the next time to post a video, the target guide sticker is directly added to the to-be-posted video according to the recommended time, so that when the to-be-posted video is played to the recommended time, the target guide sticker is displayed on the video footage or in the video playing area. In this way, it can pay attention to and memorize the personalized operation habits of the user in a timely manner. When the user posts a video next time, based on the history habits of the user, it can help the user to automatically add the target guide sticker to the to-be-posted video, which significantly simplifies the operation behavior of the user and satisfies the expectation of the user.

In the technical solution of this embodiment, on the basis of the above embodiments, the method for processing a video is optimized in this embodiment. In this embodiment, after adding the target guide sticker to the video once, in subsequent video posting, the target guide sticker is automatically added to the video, which significantly simplifies repetitive adding operations for the user, to improve the user experience and video posting efficiency.

In one implementation, before the video is posted, the method further includes: capturing/uploading an original video in response to a capturing/uploading operation on a video capturing/uploading interface; and entering a video capturing/uploading interface in response to a switching operation acting on the video capturing/uploading interface. After the editing is completed, the video posting interface is entered in response to the switching operation acting on the video editing interface. Accordingly, the target guide sticker may also be added in the video by adding a target guide sticker during video capturing/editing. Specifically, before or during video capturing, the user can trigger the sticker control and select the corresponding target guide sticker. During the video capturing process, the user can adjust and switch to different target guide stickers. Or, while editing the original video to obtain the current to-be-posted video, a target guide sticker is added on the editing interface in response to the adding instruction, so that the target guide sticker is displayed during the playing process of the current to-be-posted video.

In another implementation, the posted video may be modified and edited on a work management interface to complete the addition of target guide.

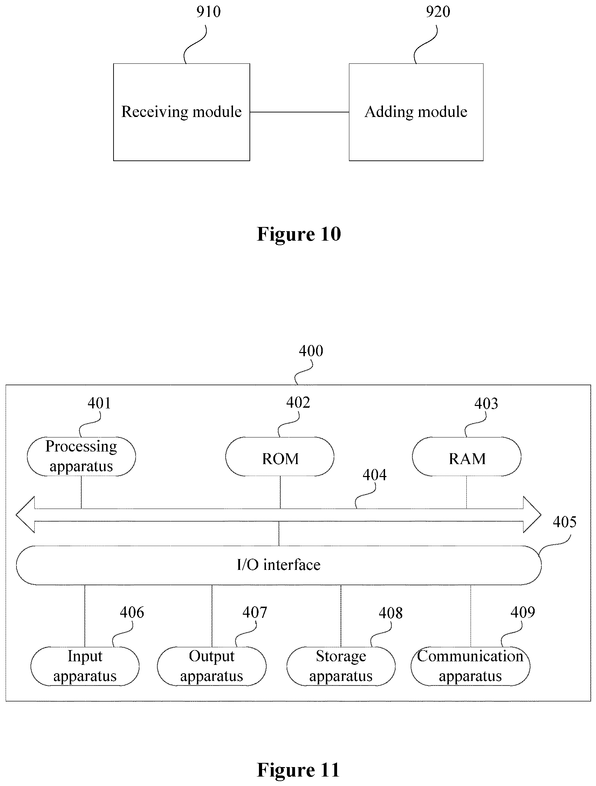

Figure 10 is a schematic structural diagram of an apparatus for processing a video according to an embodiment of the present disclosure. The apparatus includes: a receiving module 910 and an adding module 920.

The receiving module 910 is configured to receive a triggering operation acting on a target guide control on a video posting interface; and the adding module 920 is configured to add a target guide sticker in a current to-be-posted video in response to the triggering operation, to display the target guide sticker during a process of playing the current to-be-posted video.

Based on the above technical solutions, the apparatus further includes:
a sticker adding module, configured to add a target guide sticker on a video editing interface in response to an instruction for adding the target guide sticker, in a process of editing a captured original video to obtain the current to-be-posted video, to display the target guide sticker during a process of playing the current to-be-posted video.

Based on the above technical solutions, the adding module 920 includes:
an interface switching unit, configured to enter the interface for adding the target guide sticker in response to the triggering operation;
an adding unit, configured to receive a first set time, which is inputted by the user on the interface for adding the target guide sticker and at which the target guide sticker appears in the current to-be-posted video, to display the target guide sticker on video footage once the current to-be-posted video is played to the first set time.

Based on the above technical solutions, the adding unit includes:
a determination sub-unit, configured to receive a triggering operation acting on the recommended time control and determine a recommended time as the first set time; or present at least two candidate time options upon receiving a triggering operation acting on a custom time control, and determine a selected candidate time as the first set time;
where, the recommended time control and the custom time control are presented on the interface for adding the target guide sticker.

On the basis of the above technical solutions, a playing window of the current to-be-posted video and a custom time control are displayed on the interface for adding the target guide sticker, and the playing window is configured to play the current to-be-posted video and display a progress bar of the current to-be-posted video;
the determination sub-unit is further configured to, in a case that a dragging operation acting on the progress bar of the current to-be-posted video and a triggering operation acting on a recommended time control are received, determine the time when the drag operation stops as the first set time;
where the playing window of the current to-be-posted video and the custom time control are presented on the interface for adding the target guide sticker.

On the basis of the above technical solutions, the adding module 920 further includes:
a set unit, configured to receive a target presenting style of the target guide sticker, which is inputted by the user on the interface for adding the target guide sticker, to display the target guide sticker in the target presenting style during a process of playing the current to-be-posted video; or receive a target presenting position of the target guide sticker, inputted by the user on the interface for adding the target guide sticker, to display the target guide sticker at the target presenting position during a process of playing the current to-be-posted video; or receive the target presenting style and the target presenting position of the target guide sticker, inputted by the user on the interface for adding the target guide sticker, to display the target guide sticker in the target presenting style at the target presenting position during a process of playing the current to-be-posted video.

On the basis of the above technical solutions, the apparatus further includes:
a first presenting module, configured to present a preset description content when receiving a triggering operation acting on a description control, where the description control is presented on the interface for adding the target guide sticker.

On the basis of the above technical solutions, the apparatus further includes:
a playing module, configured to control the current to-be-posted video to start playing from a current playing progress position in response to the video preview operation, and display the target guide sticker on the video footage when the playing of the current to-be-posted video reaches a playing progress position corresponding to the first set time; or control the current to-be-posted video to start playing from the playing progress position corresponding to the first set time and display the target guide sticker on the video footage, in response to the video preview operation.

On the basis of the above technical solutions, the apparatus further includes:
a hiding module, configured to hide the target guide sticker when the target guide sticker is displayed for a preset duration.

On the basis of the above technical solutions, the apparatus further includes:
an adjustment module, configured to, in a case that a display position of the target guide sticker on the video footage overlaps with a display position of a set sticker on the video footage, adjust the display position of the target guide sticker on the video footage, or control the set sticker to be displayed over the target guide sticker.

On the basis of the above technical solutions, the apparatus further includes:
a return module, configured to return to the video posting interface when receiving a triggering operation acting on a return control, where the return control is displayed at a fourth position of the interface for adding the target guide sticker.

On the basis of the above technical solutions, the apparatus further includes:
a second presenting module, configured to present the first set time corresponding to the target guide sticker on the video posting interface.

On the basis of the above technical solutions, the apparatus further includes:
the determination sub-unit is further configured to determine the recommended time as a second set time at which the target guide sticker appears in another to-be-posted video other than the current to-be-posted video, to display the target guide sticker on the video footage once the another to-be-posted video is played to the second set time, in a case that a posting instruction for the to-be-posted video is received.

On the basis of the above technical solutions, the adding module 920 is configured to, in response to the triggering operation, add the target guide sticker in the current to-be-posted video, to display the target guide sticker once an audio related to the target guide sticker is identified during a process of playing the current to-be-posted video.

In the technical solution of the embodiment of the present disclosure, by receiving a triggering operation acting on a target guide control on a video posting interface; and in response to the triggering operation, adding a target guide sticker in a current to-be-posted video, to display the target guide sticker during a process of playing the current to-be-posted video, the objective of adding the target guide sticker while posting the video is realized. In this way, it can simplify the operation path of adding the target guide sticker on the video, so that the video author can easily add target guide stickers during the video posting process without jumping to other applications. Hence, it is beneficial to improve adding efficiency and user experience, which further improves video posting efficiency.

The embodiments of the present disclosure can implement the method for processing the video provided in any embodiment of the present disclosure, which has corresponding functional modules and beneficial effects for implementing the method.

It should be noticed that the units and modules included in the above apparatus are only divided according to functional logic, but are not limited to the above division, as long as the corresponding functions can be realized. In addition, the specific name of each functional unit is only intended to facilitate mutual differentiation, which is not used to limit the protection scope of the embodiments of the present disclosure.

Now referring to Figure 11, it shows a schematic structural diagram of an electronic device 400 (e.g., the terminal device or server in Figure 11) applicable for implementing the embodiments of the present disclosure. In the embodiments of the present disclosure, the terminal devices may include, but are not limited to, mobile terminals, such as mobile phones, laptops, digital broadcast receivers, PDAs (personal digital assistants), PADs (tablet computers), PMPs (portable multimedia players), vehicle-mounted terminals (such as in-vehicle navigation terminals and the like, and fixed terminals such as digital TVs, desktop computers and the like. It should be noted that the electronic device 400 shown in Figure 11 is only an example, which should not limit the functions and usage scope of the embodiments of the present disclosure.

As shown in Figure 11, the electronic device 400 may include a processing apparatus 401 (such as a central processing unit and a graphics processor) which may execute various operations and processing through a program stored in a Read Only Memory (ROM) 402 or a program loaded from the storage apparatus 408 into a Random Access Memory (RAM) 403. The RAM 403 is further configured to store various programs and data required by the electronic device 400. The processing apparatus 401, the ROM 402 and the RAM 403 are connected to each other via a bus 404. An Input/output (I/O) interface 405 is also connected to the bus 404.

Generally, the I/O interface 405 may be connected to: an input apparatus 406, such as a touch screen, a touch panel, a keyboard, a mouse, a camera, a microphone, an accelerometer, and a gyroscope; an output apparatus 407, such as a liquid crystal display (LCD), a speaker, and a vibrator; a storage apparatus 408 such as a magnetic tape and a hard disk; and a communication apparatus 409. The communication apparatus 409 enables the electronic device 400 to perform wireless or wired communication with other devices for data exchanging. Although Figure 11 shows an electronic device 400 having various apparatuses, it should be understood that the illustrated apparatuses are not necessarily required to all be implemented or included. Alternatively, more or fewer apparatuses may be implemented or included.

Particularly, according to some embodiments of the present disclosure, the process described above in conjunction with flow charts may be implemented as a computer program. For example, a computer program product is further provided according to some embodiments of the present disclosure, including a computer program carried on a non-transitory computer readable medium. The computer program includes program codes for performing the method shown in the flow charts. In the embodiments, the computer program may be downloaded and installed from a network via the communication apparatus 409, or installed from the storage apparatus 408, or installed from the ROM 402. When the computer program is executed by the processing apparatus 401, the above-mentioned functions defined in the method for processing a video according to the embodiments of the present disclosure are performed.

The terminal provided by the embodiment of the present disclosure and the method for processing a video provided by the above embodiments belong to the same invention concept, the technical details that are not described in detail in the embodiment of the present disclosure may be referred to the above embodiments, which has the same beneficial effect as the above embodiments.

A computer storage medium is further provided according to the embodiment of the present disclosure, the computer storage medium stores a computer program, the computer program, when executed by a processor, implements the method for processing a video provided by the embodiments.

It should be noted that, the computer readable medium mentioned herein may be a computer readable signal medium or a computer readable storage medium or any combination thereof. The computer readable storage medium may be, but is not limited to, a system, an apparatus, or a device in an electronic, magnetic, optical, electromagnetic, infrared, or semi-conductive form, or any combination thereof. The computer readable storage medium may be, but is not limited to, an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), a light storage device, a magnetic storage device or any combination thereof. In some embodiments of the present disclosure, the computer readable storage medium may be any tangible medium containing or storing a program, and the program may be used by or in combination with an instruction execution system, apparatus, or device. In some embodiments of the present disclosure, the computer readable signal medium may be a data signal transmitted in a baseband or transmitted as a part of a carrier wave and carrying computer readable program codes. The transmitted data signal may be in various forms, including but not limited to an electromagnetic signal, an optical signal or any proper combination thereof. The computer readable signal medium may be any computer readable medium other than the computer readable storage medium and can send, propagate or transmit programs to be used by or with an instruction execution system, apparatus or device. The program codes stored in the computer readable medium may be transmitted via any proper medium including but not limited to: wired, optical fiber cable, radio frequency (RF), or any suitable combination of the foregoing.

In some embodiments, clients and servers can communicate using any currently known or future developed network protocols, such as HyperText Transfer Protocol (HTTP), and can be interconnected with any form or medium of digital data communication (e.g., a communication network). Examples of communication networks include local area networks ("LANs"), wide area networks ("WANs"), internetworks (e.g., the Internet), and peer-to-peer networks (e.g., ad hoc peer-to-peer networks), as well as any currently known or future developed networks.

The above computer readable medium may be included in the above electronic device or may exist independently without being assembled into the electronic device.

The above computer readable medium carries one or more programs, and when the above one or more programs are executed by the electronic device, it can cause the electronic device to implement as follows:
receiving a triggering operation acting on a target guide control on a video posting interface; and
in response to the triggering operation, adding a target guide sticker in a current to-be-posted video, to display the target guide sticker during a process of playing the current to-be-posted video.

Computer program code for performing operations in embodiments of the present disclosure may be written in one or more programming languages, or a combination thereof. The programming language includes, but is not limited to, an object oriented programming language, such as Java, Smalltalk, and C++, or conventional procedural programming languages, such as "C" language and the like. The program code may be executed entirely on a user computer, or be executed partly on the user computer, or be executed as a stand-alone software package, or be executed partly on the user computer and partly on a remote computer or be executed entirely on the remote computer or server. In a case that the execution of the program code involves a remote computer, the remote computer may be connected to a user computer via any network, including a local area network (LAN) or a wide area network (WAN), or may be connected to an external computer (for example, via an Internet provided by an Internet service provider).

The flow charts and schematic diagrams in the Figures show the architecture, functionality and operations of possible implementations of the system, method and computer program product provided according to the embodiments of the present disclosure. Each of blocks in the flow charts or schematic diagrams may represent a module, a program segment, or a part of code, and the module, the program segment, or the part of code includes one or more executable instructions for implementing specified logical functions. It should be noted that in some alternative implementations, the functions noted in the blocks may be implemented in a different order than those illustrated in the Figures. For example, two blocks shown in succession may in fact be executed substantially in parallel, or sometimes be executed in a reverse order, depending upon functions involved. It should be further noted that each block in the schematic diagrams and/or flow charts, and combinations of blocks in the schematic diagrams and/or flowcharts, may be implemented by a dedicated hardware-based system configured to implement specified functions or operations, or may be implemented by using a combination of dedicated hardware and computer instructions.

The units mentioned in the description of the embodiments of the present disclosure may be implemented by means of software, or otherwise by means of hardware. The designation of a unit does not in any case constitute a limitation to the unit itself. For example, an editable content display unit may also be described as an "edit unit".

The functions described herein above may be executed at least in part by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), Systems on Chips (SOCs), Complex Programmable Logical Devices (CPLDs) and the like.

In the context of the present disclosure, a machine readable medium may be a tangible medium that may contain or store a program to be used by or in combination with an instruction execution system, apparatus or device. The machine readable medium may be a machine readable signal medium or a machine readable storage medium. The machine readable medium may include, but is not limited to, a system, an apparatus, or a device in an electronic, magnetic, optical, electromagnetic, infrared, or semi-conductive form, or any proper combination thereof. The machine readable storage medium may include an electrical connection based on one or more wires, a portable computer disk, a hard disk, a Random Access Memory (RAM), a Read Only Memory (ROM), an Erasable Programmable Read Only Memory (EPROM or flash memory), an optical fiber, a portable compact disc read only memory (CD-ROM), a light storage device, a magnetic storage device or any proper combination thereof.

According to one or more embodiments of the present disclosure, in a first example, a method for processing a video is provided, the method includes:
receiving a triggering operation acting on a target guide control on a video posting interface; and
in response to the triggering operation, adding a target guide sticker in a current to-be-posted video, to display the target guide sticker during a process of playing the current to-be-posted video.

According to one or more embodiments of the present disclosure, in a second example, a method for processing a video is provided. In an implementation, before receiving the triggering operation acting on the target guide control on the video posting interface, the method further includes:
adding a target guide sticker on a video editing interface in response to an instruction for adding the target guide sticker, in a process of editing a captured original video to obtain the current to-be-posted video, to display the target guide sticker during a process of playing the current to-be-posted video.

According to one or more embodiments of the present disclosure, in a third example, a method for processing a video is provided. In an implementation, the in response to the triggering operation, adding the target guide sticker in the current to-be-posted video, to display the target guide sticker during a process of playing the current to-be-posted video includes:
in response to the triggering operation, entering an interface for adding the target guide sticker;
receiving a first set time, which is inputted by the user on the interface for adding the target guide sticker and at which the target guide sticker appears in the current to-be-posted video, to display the target guide sticker on video footage once the current to-be-posted video is played to the first set time.

According to one or more embodiments of the present disclosure, in a fourth example, a method for processing a video is provided. In an implementation, the receiving the first set time, which is inputted by the user on the interface for adding the target guide sticker and at which the target guide sticker appears in the current to-be-posted video, includes:
upon receiving a triggering operation acting on a recommended time control, determining a recommended time as the first set time; or
upon receiving a triggering operation acting on a custom time control, presenting at least two candidate time options, and determining a selected candidate time as the first set time;
where the recommended time control and the custom time control are presented on the interface for adding the target guide sticker.

According to one or more embodiments of the present disclosure, in a fifth example, a method for processing a video is provided. In an implementation, a playing window of the current to-be-posted video and a custom time control are displayed on the interface for adding the target guide sticker, and the playing window is configured to play the current to-be-posted video and display a progress bar of the current to-be-posted video;
the receiving the first set time, which is inputted by the user on the interface for adding the target guide sticker and at which the target guide sticker appears in the current to-be-posted video, includes:
upon receiving a dragging operation acting on the progress bar and a triggering operation acting on the custom time control, determining a time point on the progress bar at which the drag operation stops as the first set time.

According to one or more embodiments of the present disclosure, in a sixth example, a method for processing a video is provided. In an implementation, the in response to the triggering operation, adding the target guide sticker in the current to-be-posted video, to display the target guide sticker during a process of playing the current to-be-posted video, further includes:
receiving a target presenting style of the target guide sticker, which is inputted by the user on the interface for adding the target guide sticker, to display the target guide sticker in the target presenting style during the process of playing the current to-be-posted video; or
receiving a target presenting position of the target guide sticker, which is inputted by the user on the interface for adding the target guide sticker, to display the target guide sticker at the target presenting position in the video footage during the process of playing the current to-be-posted video; or
receiving the target presenting style and the target presenting position of the target guide sticker, which are inputted by the user on the interface for adding the target guide sticker, to display the target guide sticker in the target presenting style at the target presenting position in the video footage during the process of playing the current to-be-posted video.

According to one or more embodiments of the present disclosure, in a seventh example, a method for processing a video is provided. In an implementation, the method further includes:
upon receiving a triggering operation acting on a description control, presenting preset description content is presented, where the description control is presented on the interface for adding the target guide sticker.

According to one or more embodiments of the present disclosure, in an eighth example, a method for processing a video is provided. In an implementation, in response to the video preview operation, controlling the current to-be-posted video to start playing from a current playing progress position, and displaying the target guide sticker on the video footage when the playing of the current to-be-posted video reaches a playing progress position corresponding to the first set time; or in response to the video preview operation, controlling the current to-be-posted video to start playing from the playing progress position corresponding to the first set time and displaying the target guide sticker on the video footage.

According to one or more embodiments of the present disclosure, in a ninth example, a method for processing a video is provided. In an implementation, the method further includes: when the target guide sticker is displayed for a preset duration, hiding the target guide sticker on the video footage.

According to one or more embodiments of the present disclosure, in a tenth example, a method for processing a video is provided. In an implementation, the method further includes: in a case that a display position of the target guide sticker on the video footage overlaps with a display position of a set sticker on the video footage, adjusting the display position of the target guide sticker on the video footage; or controlling the set sticker to be displayed over the target guide sticker.

According to one or more embodiments of the present disclosure, in an eleventh example, a method for processing a video is provided. In an implementation, the method further includes: upon receiving a triggering operation acting on a return control, returning to the video posting interface, where the return control is presented on the interface for adding the target guide sticker.

According to one or more embodiments of the present disclosure, in a twelfth example, a method for processing a video is provided. In an implementation, the method further includes: presenting the first set time corresponding to the target guide sticker on the video posting interface.

According to one or more embodiments of the present disclosure, in a thirteenth example, a method for processing a video is provided. In an implementation, the method further includes: upon receiving a posting instruction for another to-be-posted video other than the current to-be-posted video, determining the recommended time as a second set time at which the target guide sticker appears in the another to-be-posted video, to display the target guide sticker on video footage once the another to-be-posted video is played to the second set time.

According to one or more embodiments of the present disclosure, in a fourteenth example, a method for processing a video is provided. In an implementation, the in response to the triggering operation, adding the target guide sticker in the current to-be-posted video, to display the target guide sticker during a process of playing the current to-be-posted video includes: in response to the triggering operation, adding the target guide sticker in the current to-be-posted video, to display the target guide sticker once an audio related to the target guide sticker is identified during the process of playing the current to-be-posted video.

According to one or more embodiments of the present disclosure, in a fifteenth example, an apparatus for processing a video is provided. In an implementation, the apparatus includes:
a receiving module, configured to receive a triggering operation acting on a target guide control on a video posting interface; and
an adding module, configured to add a target guide sticker in a current to-be-posted video in response to the triggering operation, to display the target guide sticker during a process of playing the current to-be-posted video.

According to one or more embodiments of the present disclosure, in a sixteenth example, an electronic device is provided. In an implementation, the electronic device includes:
one or more processors;
a storage apparatus, configured to store one or more programs;
where, the one or more programs, when executed by the one or more processors, implement the method for processing the video below:
   receiving a triggering operation acting on a target guide control on a video posting interface; and
   in response to the triggering operation, adding a target guide sticker in a current to-be-posted video, to display the target guide sticker during a process of playing the current to-be-posted video.

According to one or more embodiments of the present disclosure, in a seventeenth example, a store medium is provided. In an implementation, the store medium includes computer-executable instructions; where the computer-executable instructions, when executed by a computer processor, are configured to implement the method for processing the video below:
receiving a triggering operation acting on a target guide control on a video posting interface; and
in response to the triggering operation, adding a target guide sticker in a current to-be-posted video, to display the target guide sticker during a process of playing the current to-be-posted video.

The above description merely illustrates the preferred embodiments of the present disclosure and the technical principles employed. Those skilled in the art should understand that the scope of present disclosure is not limited to the technical solutions formed by certain combination of the above-mentioned technical features, and should also cover other technical solutions formed by any combination of the above-mentioned technical features and any equivalent features without departing from the disclosed concept. For example, a technical solution formed by replacing the features with the technical features disclosed in the present disclosure (but not limited to) with similar functions.

It should be noted that the relationship terms "first", "second" and the like herein are used for distinguishing an entity or operation from another entity or operation, but not intended to necessitate or imply an actual relationship or order between these entities or operations. Further, the terms "include", "comprise" or any variant thereof are intended to encompass nonexclusive inclusion such that a process, method, article or device including a series of elements includes not only those elements but also other elements which have not been listed definitely or an element(s) inherent to the process, method, article or device. Unless expressively limited otherwise, a process, method, article or device limited by "comprising/including a(n) ..." does not exclude existence of other identical elements in such process, method, article or device.

The above are only specific implementations of the present disclosure, such that those skilled in the art can understand or implement the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, rather, should be defined by the broadest scope consistent with the principle and novel features disclosed herein.

## Claims

1. A method for processing a video, comprising:
receiving a triggering operation acting on a target guide control on a video posting interface; and
in response to the triggering operation, adding a target guide sticker in a current to-be-posted video, to display the target guide sticker during a process of playing the current to-be-posted video.

2. The method according to claim 1, wherein the in response to the triggering operation, adding the target guide sticker in the current to-be-posted video, to display the target guide sticker during the process of playing the current to-be-posted video comprises:
in response to the triggering operation, entering an interface for adding the target guide sticker;
receiving a first set time, which is inputted by the user on the interface for adding the target guide sticker and at which the target guide sticker appears in the current to-be-posted video, to display the target guide sticker on video footage once the current to-be-posted video is played to the first set time.

3. The method according to claim 2, wherein the receiving the first set time, which is inputted by the user on the interface for adding the target guide sticker and at which the target guide sticker appears in the current to-be-posted video, comprises:
upon receiving a triggering operation acting on a recommended time control, determining a recommended time as the first set time; or
upon receiving a triggering operation acting on a custom time control, presenting at least two candidate time options and determining a selected candidate time as the first set time;
wherein the recommended time control and the custom time control are presented on the interface for adding the target guide sticker.

4. The method according to claim 2, wherein a playing window for the current to-be-posted video and a custom time control are displayed on the interface for adding the target guide sticker, and the playing window is configured to play the current to-be-posted video and display a progress bar of the current to-be-posted video;
the receiving the first set time, which is inputted by the user on the interface for adding the target guide sticker and at which the target guide sticker appears in the current to-be-posted video, comprises:
upon receiving a dragging operation acting on the progress bar and a triggering operation acting on the custom time control, determining a time point on the progress bar at which the drag operation stops as the first set time.

5. The method according to claim 2, wherein the in response to the triggering operation, adding the target guide sticker in the current to-be-posted video, to display the target guide sticker during the process of playing the current to-be-posted video comprises:
receiving a target presenting style of the target guide sticker, which is inputted by the user on the interface for adding the target guide sticker, to display the target guide sticker in the target presenting style during the process of playing the current to-be-posted video; or
receiving a target presenting position of the target guide sticker, which is inputted by the user on the interface for adding the target guide sticker, to display the target guide sticker at the target presenting position in the video footage during the process of playing the current to-be-posted video; or
receiving the target presenting style and the target presenting position of the target guide sticker, which are inputted by the user on the interface for adding the target guide sticker, to display the target guide sticker in the target presenting style at the target presenting position in the video footage during the process of playing the current to-be-posted video.

6. The method according to claim 2, further comprising:
upon receiving a video preview operation triggered by the user on the interface for adding the target guide sticker, in response to the video preview operation, controlling the current to-be-posted video to start playing from a current playing progress position, and displaying the target guide sticker on the video footage when the playing of the current to-be-posted video reaches a playing progress position corresponding to the first set time; or
upon receiving the video preview operation triggered by the user on the interface for adding the target guide sticker, in response to the video preview operation, controlling the current to-be-posted video to start playing from the playing progress position corresponding to the first set time and displaying the target guide sticker on the video footage.

7. The method according to claim 6, further comprising:
when the target guide sticker is displayed for a preset duration, hiding the target guide sticker on the video footage.

8. The method according to claim 6, further comprising:
in a case that a display position of the target guide sticker on the video footage overlaps with a display position of a set sticker on the video footage, adjusting the display position of the target guide sticker on the video footage; or controlling the set sticker to be displayed over the target guide sticker.

9. The method according to any one of claims 2 to 8, further comprising:
presenting the first set time corresponding to the target guide sticker on the video posting interface.

10. The method according to claim 1, wherein the in response to the triggering operation, adding the target guide sticker in the current to-be-posted video, to display the target guide sticker during the process of playing the current to-be-posted video comprises:
in response to the triggering operation, adding the target guide sticker in the current to-be-posted video, to display the target guide sticker once an audio related to the target guide sticker is identified during the process of playing the current to-be-posted video.

11. The method according to claim 1, wherein, before receiving the triggering operation acting on the target guide control on the video posting interface, the method further comprises:
adding a target guide sticker on a video editing interface in response to an instruction for adding the target guide sticker, in a process of editing a captured original video to obtain the current to-be-posted video, to display the target guide sticker during the process of playing the current to-be-posted video.

12. An apparatus for processing a video, comprising:
a receiving module, configured to receive a triggering operation acting on a target guide control on a video posting interface; and
an adding module, configured to add a target guide sticker in a current to-be-posted video in response to the triggering operation, to display the target guide sticker during a process of playing the current to-be-posted video.

13. An electronic device, comprising:
one or more processors;
a storage configured to store one or more programs;
wherein the one or more programs, when executed by the one or more processors, cause the one or more processors to implement the method for processing the video according to any one of claims 1 to 11.

14. A store medium comprising computer-executable instructions, wherein the computer-executable instructions are configured to, when executed by a computer processor, implement the method for processing the video according to any one of claims 1 to 11.

15. A computer program product, comprising a computer program carried on a non-transitory computer readable medium, wherein the computer program comprises program codes for implementing the method for processing the video according to any one of claims 1 to 11.
